# EUROPEAN PATENT APPLICATION

(11) **EP 4 711 953 A1**
(43) Date of publication of application: **18.03.2026**
(21) Application number: 24847665.7
(22) Date of filing: 22.04.2024
(51) Int. Cl.: G06F 16/901

(54) **CELL SORTING METHOD AND CELL DISPLAY METHOD**

(30) Priority: 28.07.2023 CN 202310945214; 28.07.2023 CN 202310949600; 28.07.2023 CN 202310951693; 28.07.2023 CN 202310948114; 28.07.2023 CN 202310951542
(71) Applicant: Nanjing Livingchip Biotechnology Co., Ltd., Nanjing, Jiangsu 211899 (CN)
(72) Inventor: QIAO, Yong, Nanjing, Jiangsu 211899 (CN)
(74) Representative: Corradini, Cesare
(86) International application number: PCT/CN2024/089063
(87) International publication number: WO 2025/025699

(57) **Abstract**

The present application relates to a cell sorting method and a cell display method. The cell sorting method includes: acquiring cell image data sent from a cell sorting device (202); locating cells to be sorted in the cell image data through a deep learning model (204); evaluating fluorescence signal intensities of the cells to be sorted based on the cell image data (206); and aspirating a cell meeting a preset sorting condition from the cells to be sorted according to the fluorescence signal intensities of the cells to be sorted (208).

## Description

### CROSS-REFERENCE TO RELATED APPLICATIONS

The present application claims the priorities of Chinese patent applications No. 2023109452145 filed on July 28, 2023, entitled "Cell Sorting Method, Apparatus, Computer Equipment and Storage Medium", No. 2023109496001 filed on July 28, 2023, entitled "Cell Extraction Method, Apparatus, Computer Equipment and Storage Medium", No. 2023109516931 filed on July 28, 2023, entitled "Display Method of Cells in Chip, Apparatus, Computer Equipment and Storage Medium", No. 2023109481148 filed on July 28, 2023, entitled "Calibration Method of Cell Sorting Device, Apparatus, Computer Equipment and Storage Medium", and No. 2023109515426 filed on July 28, 2023, entitled "Cell Display Method, Apparatus, Computer Equipment and Storage Medium", which are hereby incorporated herein by reference in their entireties.

### TECHNICAL FIELD

This application relates to the field of cell sorting, and in particular, to a cell sorting method and a cell display method.

### BACKGROUND

With the development of the biomedical field, cell sorting technology has emerged. The cell sorting technology refers to the separation and processing of a specific cell subpopulation from a mixed cell sample according to the characteristics of cells, thereby enabling functional analysis of the specific cells.

In the traditional technology, cell sorting is performed by using the threshold segmentation method or the template matching method. However, it is difficult for the threshold segmentation method to provide appropriate thresholds for all backgrounds and cell morphologies, and it is also difficult for the template matching method to accurately match cells, resulting in low cell sorting accuracy.

### SUMMARY

Based on the above, it is necessary to provide a cell sorting method and a cell display method to address the above technical problems.

In a first aspect, the present application provides a cell sorting method applied to a terminal. The cell sorting method includes:
acquiring cell image data sent from a cell sorting device;
locating cells to be sorted in the cell image data through a deep learning model;
evaluating fluorescence signal intensities of the cells to be sorted based on the cell image data; and
aspirating a cell meeting a preset sorting condition from the cells to be sorted according to the fluorescence signal intensities of the cells to be sorted.

In an embodiment, locating the cells to be sorted in the cell image data through the deep learning model includes:
inputting the cell image data into the deep learning model, extracting fluorescence signal characteristics of the cell image data, and determining position data of the cells to be sorted in the cell image data according to the fluorescence signal characteristics.

In an embodiment, evaluating the fluorescence signal intensities of the cells to be sorted based on the cell image data to obtain the fluorescence signal intensities of the cells to be sorted includes:
cutting the cells to be sorted out from the cell image data to obtain an image of the cells to be sorted; and
subjecting the image of the cells to be sorted to a grayscale analysis to obtain the fluorescence signal intensities of the cells to be sorted.

In an embodiment, subjecting the image of the cells to be sorted to the grayscale analysis to obtain the fluorescence signal intensities of the cells to be sorted includes:
subjecting the image of the cells to be sorted to a denoising processing, and
subjecting the image of the cells to be sorted after the denoising processing to a threshold segmentation; and
subjecting the image of the cells to be sorted after the segmentation to the grayscale analysis to obtain the fluorescence signal intensities of the cells to be sorted.

In an embodiment, the method further includes:
identifying, through the deep learning model, first position data of each cell in a first bright-field cell image before cell sorting and second position data of each cell in a second bright-field cell image after cell sorting;
comparing the first position data with the second position data; and
determining that the cell sorting has failed if the comparison indicates consistency, and returning to the step of locating the cells to be sorted in the cell image data through the deep learning model to continue the cell sorting.

In a second aspect, the present application further provides a cell display method applied to a cell sorting device. The cell sorting device includes an imaging mechanism. The cell display method includes:
on a condition that a sorting component accommodating cells to be sorted is moved to a preset region of the cell sorting device, imaging the cells to be sorted in the preset region by the imaging mechanism to acquire cell image data; and
sending the cell image data to a terminal for display.

In an embodiment, the imaging mechanism includes an imaging lighting unit, an optical path assembly, and a detection assembly; imaging the cells to be sorted in the preset region by the imaging mechanism to acquire the cell image data includes:
providing, by the imaging lighting unit, illumination for the sorting component and the optical path assembly;
imaging, by the optical path assembly, the cells to be sorted under an illuminated condition; and
acquiring, by the detection assembly, the cell image data generated by the optical path assembly.

In an embodiment, the imaging mechanism further includes a fluorescence assembly, and the method further includes:
irradiating, by the fluorescence assembly, the cells to be sorted to cause the cells to be sorted to emit fluorescence;
imaging, by the optical path assembly, the cells to be sorted to acquire a fluorescence image of the cells to be sorted; and
acquiring, by the detection assembly, the fluorescence image of the cells to be sorted.

In an embodiment, the fluorescence assembly includes a filter switching unit, and irradiating, by the fluorescence assembly, the cells to be sorted, to cause the cells to be sorted to emit fluorescence includes:
switching among excitation lights of multiple wavelength bands by the filter switching unit in the fluorescence assembly; and
irradiating the cells to be sorted respectively with the excitation lights of multiple wavelength bands, to cause the cells to be sorted to emit different fluorescent lights.

In an embodiment, the cell sorting device includes a picking mechanism, the picking mechanism includes an aspirating-and-releasing member, the method further includes steps of calibrating the picking mechanism before acquiring the cell image data, and the step of calibrating the picking mechanism include:
acquiring image data of the aspirating-and-releasing member, and determining a clarity degree of the image data of the aspirating-and-releasing member through a calibration program;
moving the aspirating-and-releasing member according to the clarity degree through the calibration program to obtain an aspirating-and-releasing member image with an optimal clarity degree; and
adjusting position data of the aspirating-and-releasing member in the aspirating-and-releasing member image through the calibration program until a preset condition is met, and storing a current position data of the aspirating-and-releasing member.

In an embodiment, determining the clarity degree of the image data of the aspirating-and-releasing member through the calibration program includes:
subjecting the image data of the aspirating-and-releasing member to an edge detection to acquire a brightness distribution of a plurality of boundary points in the image data; and
determining the clarity degree of the image data of the aspirating-and-releasing member according to a preset image clarity evaluation relationship and the brightness distribution of the plurality of boundary points.

In an embodiment, the picking mechanism further includes a picking movement assembly; moving the aspirating-and-releasing member according to the clarity degree through the calibration program to obtain the aspirating-and-releasing member image with the optimal clarity degree includes:
identifying a current position of the aspirating-and-releasing member in the image data of the aspirating-and-releasing member through the calibration program, and controlling the picking movement assembly to move the aspirating-and-releasing member according to the current position of the aspirating-and-releasing member; and
returning to the step of acquiring the image data of the aspirating-and-releasing member until the image data of the aspirating-and-releasing member reaches the optimal clarity degree, thereby obtaining the aspirating-and-releasing member image with the optimal clarity degree.

In an embodiment, the picking mechanism further includes a mounting assembly, and the mounting assembly includes a fixing unit; adjusting the position data of the aspirating-and-releasing member in the aspirating-and-releasing member image through the calibration program until the preset condition is met, and storing the current position data of the aspirating-and-releasing member includes:
identifying the position data of the aspirating-and-releasing member in the aspirating-and-releasing member image through the calibration program; and
controlling the fixing unit to perform fine adjustment of the aspirating-and-releasing member through the calibration program based on the position data, such that the position data of the aspirating-and-releasing member correspond to a preset position in the aspirating-and-releasing member image, and storing the current position data of the aspirating-and-releasing member as a calibration value.

In an embodiment, the sorting component is a biological culture chip, and the method further includes:
on a condition that the biological culture chip accommodating the cells to be sorted is moved to the preset region of the cell sorting device, imaging the cells to be sorted in the preset region through an objective lens of the imaging mechanism to acquire the cell image data.

In an embodiment, the biological culture chip includes a plurality of accommodation cavities accommodating the cells to be sorted, and adjacent accommodation cavities being spaced apart by a preset distance.

Details of one or more embodiments of the present application are set forth in the accompanying drawings and following description. Other features, objectives and advantages of the present application will become apparent from the specification, drawings and claims.

### BRIEF DESCRIPTION OF THE DRAWINGS

To describe the technical solutions in the embodiments of the present application more clearly, the following briefly describes the accompanying drawings required for describing the embodiments. Obviously, the drawings in the following description are merely some embodiments of the present application. For those of ordinary skill in the art, other drawings can also be obtained based on the disclosed drawings without involving any inventive effort.
FIG. 1 is a schematic view showing an application environment for an embodiment of a cell sorting method.
FIG. 2 shows a flowchart of an embodiment of a cell sorting method.
FIG. 3 shows a flowchart of an embodiment of a cell display method.
FIG. 4 shows a flowchart of an embodiment of acquiring cell image data.
FIG. 5 shows a flowchart of an embodiment of calibrating a picking mechanism;
FIG. 6 shows a flowchart of another embodiment of the cell display method.
FIG. 7 is a structural block view of an embodiment of a cell sorting apparatus.
FIG. 8 is a structural block view of an embodiment of a cell display device.
FIG. 9 is internal structural view of an embodiment of a computer equipment.

### DETAILED DESCRIPTION

The following clearly and completely describes the technical solutions in the embodiments of the present application with reference to the drawings in the embodiments of the present application. Obviously, the described embodiments are only some, not all, of the embodiments of the present application. Based on the embodiments of the present application, all other embodiments obtained by a person of ordinary skill in the art without involving creative efforts shall fall within the protection scope of the present application.

Cell sorting technology is a technology that separates cells that meet preset requirements from a population of cells to be sorted according to the characteristics of cells. When functional analysis of specific cells that meet preset requirements is required-such as analyzing cellular molecules in cell culture supernatant by enzyme-linked immunosorbent assay (ELISA), or studying cellular function through cell co-culture assays-all such analysis presupposes the acquisition of high-purity cells that satisfy the preset requirements.

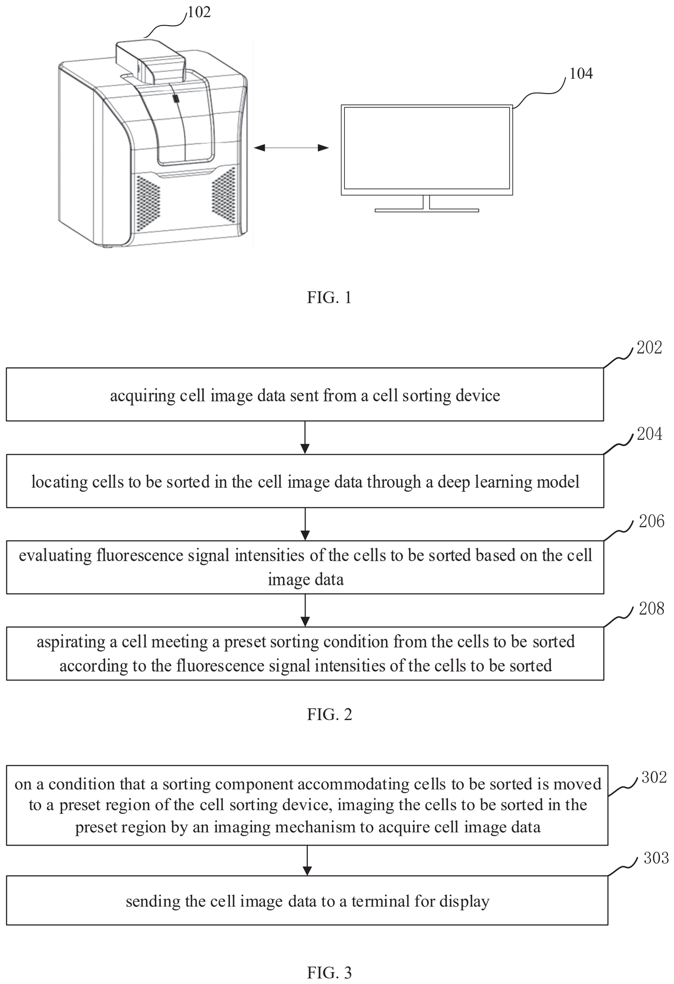

The cell sorting method provided in the embodiments of the present application can be applied in an application environment shown in FIG. 1, wherein a cell sorting device 102 is in communication with a terminal 104 through a network. The cell sorting device 102 sends the acquired cell image data to the terminal 104. The terminal 104 locates the cells to be sorted in the cell image data through a deep learning model, evaluates the fluorescence signal intensities of the cells to be sorted according to the cell image data, and aspirates a cell meeting a preset sorting condition from the cells to be sorted according to the fluorescence signal intensities of the cells to be sorted. The terminal 104 can be, but is not limited to, various personal computers, notebook computers, smartphones, tablets, and image processing devices.

In an embodiment, as shown in FIG. 2, a cell sorting method is provided. As an example for description, the cell sorting method is applied to a terminal. The cell sorting method includes the following steps.

Step 202: acquiring cell image data sent from a cell sorting device.

Step 204: locating cells to be sorted in the cell image data through a deep learning model.

The cell image data refers to an image including the cells to be sorted, obtained by imaging the cells to be sorted. The cells to be sorted can be cells that have undergone specific screening using fluorescent dyes.

Specifically, the cell sorting device images the cells to be sorted to acquire the cell image data, and sends the cell image data to the terminal. There can be a plurality of cells to be sorted. The cell image data can be fluorescence image data. The terminal calls the deep learning model, and inputs the cell image data into the deep learning model to perform target recognition on the cell image data and determine a position of the cells to be sorted.

Step 206: evaluating fluorescence signal intensities of the cells to be sorted based on the cell image data.

After determining the position of the cells to be sorted in the cell image data, the cell image data is subjected to a grayscale analysis through image processing to obtain grayscale values, so as to evaluate the fluorescence signal intensities of the cells to be sorted according to the grayscale values.

Step 208: aspirating a cell meeting a preset sorting condition from the cells to be sorted according to the fluorescence signal intensities of the cells to be sorted.
after determining whether the fluorescence signal intensities of the cells to be sorted meet the preset sorting condition, a cell that meets the preset sorting condition can be screened out from the cells to be sorted, and the cell sorting device is then controlled to aspirate the cell that meets the preset sorting condition. The preset sorting condition can be the fluorescence signal intensity exceeding a preset threshold. For example, the aspirated cells can be B cells, hybridoma cells, tumor cells, etc.

Optionally, the cell sorting device includes a main body, a picking mechanism, a carrier mechanism, an imaging mechanism, and a control mechanism. The main body is configured to support and accommodate other mechanisms in the cell sorting device. An accommodation space configured to accommodate the picking mechanism, the carrier mechanism, the imaging mechanism, and the control mechanism is formed in the main body. The carrier mechanism is configured to carry a sorting component. The sorting component is configured to accommodate the cells to be sorted. The imaging mechanism is configured to image the cells to be sorted, and send the cell image data to the terminal. The terminal is configured to display the cell image data, locate the cells to be sorted in the cell image data through the deep learning model, evaluate the fluorescence signal intensities of the cells to be sorted based on the cell image data, and screen the cell meeting the preset sorting condition from the cells to be sorted according to the fluorescence signal intensities of the cells to be sorted. The picking mechanism is configured to aspirate and collect the cell meeting the preset sorting condition in the sorting component, thereby sorting cells by the preset sorting condition. The control mechanism is configured to control the mechanisms of the cell sorting device to perform cell sorting operations.

In the above cell sorting method, the screening of the cells to be sorted and the evaluation of the fluorescence signal intensities are realized by combining deep learning and conventional image processing. The cells to be sorted are located through the deep learning model, then the fluorescence signal intensities of the cells to be sorted are evaluated by using the image processing technique, and then the cell meeting the preset sorting condition is aspirated from the cells to be sorted according to the fluorescence signal intensities of the cells to be sorted. This approach addresses the problem of low cell locating accuracy in both template matching method and threshold segmentation method, which struggle to distinguish fluorescence signals from impurities or background due to significant variations in fluorescence signals. This approach realizes accurate cell locating, and the signal strength evaluation based on this can greatly improve the accuracy of cell sorting. In addition, by using the cell sorting device, the cell meeting the preset sorting condition is automatically sorted from the cells to be sorted for cell separation and purification, exhibiting advantages such as multi-species, high throughput, multiple sorting, short sorting cycles, and high sorting accuracy. Compared with conventional manual picking, cell sorting by using the cell sorting device can reduce interference from human factors, ensure consistency of cells during the cell sorting process, accurately obtain morphologically intact and highly viable single cells, and improve the sorting efficiency, thereby realizing high-throughput single-cell sorting.

In an embodiment, locating the cells to be sorted in the cell image data through the deep learning model includes: inputting the cell image data into the deep learning model, extracting fluorescence signal characteristics of the cell image data, and determining position data of the cells to be sorted in the cell image data according to the fluorescence signal characteristics.

The terminal acquires the cell image data sent from the imaging mechanism of the cell sorting device, and displays the cell image data. The cell image data can be fluorescence image data. The fluorescence image data refers to an image with fluorescence characteristics captured when the cells to be sorted are illuminated with bright ambient light and a filter unit is used during imaging of the cells to be sorted.

Specifically, the imaging mechanism of the cell sorting device includes a fluorescence assembly, an optical path assembly, and a detection assembly. The fluorescence assembly and the optical path assembly are arranged on the same side of the cells to be sorted. The fluorescence assembly is configured to cause the cells to be sorted to emit fluorescence for acquiring fluorescence image data of the cells to be sorted. The optical path assembly is configured to form an optical path of the imaging mechanism. The optical path assembly includes optical elements forming the optical path, so as to realize imaging of the cells to be sorted. The detection assembly is configured to acquire the image data of the cells to be sorted formed through the optical path assembly.

The terminal inputs the acquired cell image data into the deep learning model, and extracts the fluorescence signal characteristics of the cell image data through the deep learning model. The fluorescence signal characteristics can include contours of the cells to be sorted, and location and number of fluorescent spots in the cells to be sorted. The contours of the cells to be sorted are thus determined as their position data. For example, the position data can be position coordinates of the cells to be sorted.

Optionally, the deep learning model can be obtained by training on fluorescence signal characteristics of a large number of cells, so that the deep learning model can accurately recognize fluorescence signals and thereby locate cells.

In this embodiment, the fluorescence signal characteristics of the cell image data are extracted through the deep learning model, and the position data of the cells to be sorted in the cell image data are determined according to the fluorescence signal characteristics, which fully leverages the advantages of deep learning technology to achieve accurate cell locating.

In an embodiment, evaluating the fluorescence signal intensities of the cells to be sorted based on the cell image data to obtain the fluorescence signal intensities of the cells to be sorted includes: cutting the cells to be sorted out from the cell image data to obtain an image of the cells to be sorted; and subjecting the image of the cells to be sorted to a grayscale analysis to obtain the fluorescence signal intensities of the cells to be sorted.

The image of the cells to be sorted refers to a cell image cut out along the position data as the boundary of the cells to be sorted.

After locating the cells to be sorted in the cell image data, the cells to be sorted are cut out to obtain the image of the cells to be sorted. The image of the cells to be sorted is subjected to the grayscale analysis to obtain grayscale values of the image of the cells to be sorted. The fluorescence signal intensities of the cells to be sorted are determined according to a relationship between the grayscale values and the fluorescence signal intensities.

Optionally, the position data of the cells to be sorted in each cell image can be determined through the deep learning model, and the fluorescent spots of the cells to be sorted in each cell image can be identified according to the position data, so as to realize locating of the cells to be sorted. Further, subjecting the image of the cells to be sorted to the grayscale analysis to obtain the fluorescence signal intensities of the cells to be sorted includes: subjecting the fluorescent spots in the image of the cells to be sorted to a grayscale analysis to obtain grayscale values of the fluorescent spots, and determining the fluorescence signal intensities of the cells to be sorted according to the grayscale values. By cutting out the image of the cells to be sorted, the scope of the fluorescence signal intensity analysis can be reduced, which is beneficial to improve the efficiency of the fluorescence signal intensity analysis.

In this embodiment, the image of the cells to be sorted is subjected to the grayscale analysis to obtain the fluorescence signal intensities of the cells to be sorted. The fluorescence signal intensities are determined according to the relationship between the grayscale values and the fluorescence signal intensities, so that the fluorescence signal intensities of the cells to be sorted can be quickly and accurately evaluated.

In the above embodiment, subjecting the image of the cells to be sorted to the grayscale analysis to obtain the fluorescence signal intensities of the cells to be sorted includes: subjecting the image of the cells to be sorted to a denoising processing, and subjecting the image of the cells to be sorted after the denoising processing to a threshold segmentation; subjecting the image of the cells to be sorted after the segmentation to the grayscale analysis to obtain the fluorescence signal intensities of the cells to be sorted.

Specifically, the denoising processing can be an image preprocessing method known to those skilled in the art and is not limited herein. The denoising processing is used to remove noise points from the image of the cells to be sorted. The denoised image of the cells to be sorted is then subjected to the threshold segmentation to segment the cells to be sorted from the background in the image, so that the image presents a distinct black-and-white effect. The threshold segmentation can also be referred to as binarization processing. Then, the grayscale values of the fluorescent spots in the segmented image of the cells to be sorted are calculated to obtain the grayscale values of the fluorescent spots, and an average grayscale value of fluorescent spots belonging to the same cell to be sorted is calculated. The fluorescence signal intensity of each cell to be sorted is determined according to the relationship between the grayscale values and the fluorescence signal intensities and based on the average grayscale value of the fluorescent spots in each cell to be sorted.

In this embodiment, the image of the cells to be sorted is subjected to the denoising processing, thereby eliminating the influence of noise points. The denoised image of the cells to be sorted is subjected to the threshold segmentation, and then subjected to the grayscale analysis to obtain the fluorescence signal intensities of the cells to be sorted. The threshold segmentation can segment the cells to be sorted from the background in the image, so that the image presents a distinct black-and-white effect, which is beneficial to improving the accuracy of determining the fluorescence signal intensities of the cells.

In an embodiment, when the cell image data includes multiple types of fluorescence images, a cell meeting the preset sorting condition is aspirated from the cells to be sorted according to fluorescence signal intensities of the fluorescent spots in the multiple types of fluorescence images.

Specifically, for each type of fluorescence image, an average grayscale value of fluorescent spots belonging to the same cell to be sorted is calculated. The fluorescence signal intensity of each cell to be sorted is determined according to the relationship between the grayscale values and the fluorescence signal intensities, and based on the average grayscale value of the fluorescent spots in each cell to be sorted. Subsequently, the fluorescence signal intensities of the plurality of cells to be sorted are ranked, the cell meeting the preset sorting condition is determined based on the ranking results corresponding to the multiple types of fluorescence images, and an aspirating-and-releasing member in the picking mechanism is controlled to aspirate the cell meeting the preset sorting condition. The fluorescence signal intensities of each cell to be sorted include a 4',6-diamidino-2-phenylindole (DAPI) fluorescence value, a tetramethylrhodamine isothiocyanate (TRITC) fluorescence value, and a fluoresceine isothiocyanate (FITC) fluorescence value. The ranking results corresponding to the multiple types of fluorescence images include a ranking result of DAPI fluorescence values, a ranking result of TRITC fluorescence values, and a ranking result of FITC fluorescence values.

Further, impurities without cell nuclei are removed according to the ranking result of DAPI fluorescence values. The cells having TRITC fluorescence values lower than a preset low threshold in the total cells are labeled according to the ranking result of TRITC fluorescence values. According to the ranking result of FITC fluorescence values, if a FITC fluorescence value of a labeled cell is greater than a preset high threshold, the cell is determined as meeting the preset sorting condition.

In an embodiment, the method further includes: identifying, through the deep learning model, first position data of each cell in a first bright-field cell image before cell sorting and second position data of each cell in a second bright-field cell image after cell sorting; comparing the first position data with the second position data; and determining that the cell sorting has failed if the comparison indicates consistency, and returning to the step of locating the cells to be sorted in the cell image data through the deep learning model to continue the cell sorting.

The cell sorting device can further acquire the first bright-field cell image before cell sorting, and send the first bright-field cell image to the terminal. The terminal inputs the first bright-field cell image into the deep learning model to identify the first position data of each cell in the first bright-field cell image.

After the aspirating-and-releasing member is controlled to complete cell sorting, the cell sorting device can acquire the second bright-field cell image and send the second bright-field cell image to the terminal. The terminal inputs the second bright-field cell image into the deep learning model to identify the second position data of each cell in the second bright-field cell image. The first position data is compared with the second position data. If the comparison indicates consistency, it indicates that the cell aspiration has failed. In this case, the method returns to the step of locating the cells to be sorted in the cell image data through the deep learning model to continue the cell sorting. If the second position data lacks data present in the first position data, that is, the comparison indicates inconsistency, it indicates that the cell existed before sorting but is absent after sorting, meaning the cell aspiration was successful.

In this embodiment, the cell positions before and after cell sorting are identified through the deep learning model, and the cell positions are compared to determine whether the cell aspiration was successful, so as to ensure the accuracy of cell aspiration and avoid missing a cell to be sorted.

In an embodiment, as shown in FIG. 3, a cell display method is provided. As an example for description, the cell display method is applied to the cell sorting device in FIG. 1. The cell display method includes the following steps.

Step 302: on a condition that a sorting component accommodating cells to be sorted is moved to a preset region of the cell sorting device, imaging the cells to be sorted in the preset region by the imaging mechanism to acquire cell image data.

Step 304: sending the cell image data to the terminal for display.

The preset region refers to the position where an image with an optimal clarity degree can be captured. The cell image data refers to an image including the cells to be sorted, obtained by imaging the cells to be sorted.

Specifically, the carrier mechanism of the cell sorting device includes a carrier assembly. The carrier assembly includes a first carrier and a second carrier. The first carrier is configured to carry the sorting component accommodating the cells to be sorted. The second carrier is configured to carry the first carrier. The second carrier is movable relative to a base of the main body under the drive of a carrier movement assembly, thereby moving the sorting component to the preset region relative to the base of the main body.

An optical path assembly includes an objective lens and an imaging lens. The objective lens has a specific focal length. When the sorting component accommodating the cells to be sorted moves to the preset region of the cell sorting device, the objective lens images the cells to be sorted in the preset region. For example, the objective lens can be a 10X objective lens. It should be noted that, the magnification of the objective lens can be set according to actual needs, and is not limited herein.

Optionally, the optical path assembly can include a plurality of objective lenses to acquire image data of the cells to be sorted under different magnifications.

In an embodiment, during the imaging process, the optical path assembly adjusts a distance between the objective lens and the sorting component to focus the objective lens and image the cells to be sorted.

Specifically, the optical path assembly further includes an objective lens movement unit. The objective lens movement unit is configured to focus the objective lens by changing the distance between the objective lens and the sorting component, thereby ensuring clear imaging of the cells to be sorted, and enabling the imaging mechanism to acquire clear image data of the cells to be sorted.

In the above cell display method, when the sorting component accommodating the cells to be sorted is moved to the preset region of the cell sorting device, the cells to be sorted in the preset region is imaged through the imaging mechanism in the cell sorting device to acquire the image data of the cells to be sorted, and the image data is displayed through the terminal. Since the terminal can visually display the cells to be sorted, which is convenient for adjusting the clarity of the image, the efficiency of cell sorting can be improved.

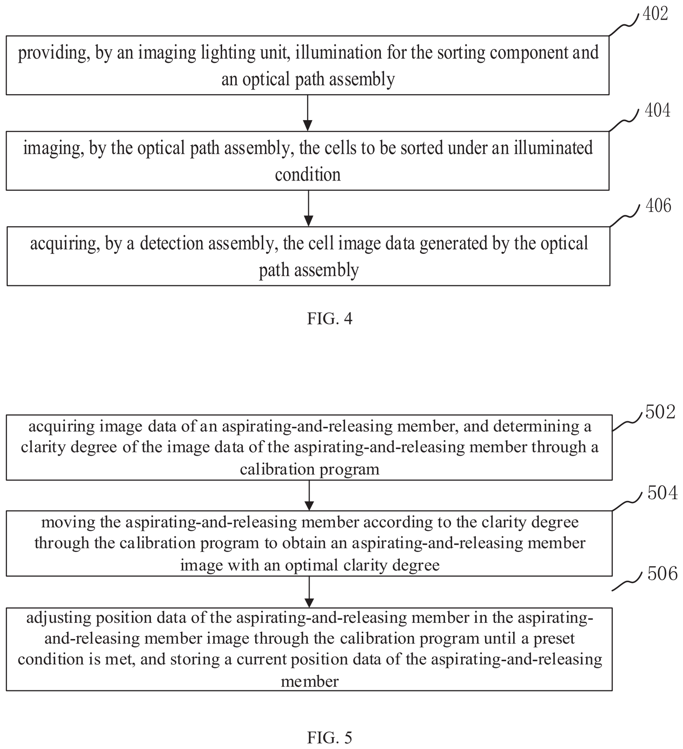

In an embodiment, as shown in FIG. 4, the imaging mechanism includes an imaging lighting unit, the optical path assembly, and a detection assembly; imaging the cells to be sorted in the preset region by the imaging mechanism to acquire the cell image data of the cells to be sorted includes:
Step 402: providing, by the imaging lighting unit, illumination for the sorting component and the optical path assembly.
Step 404: imaging, by the optical path assembly, the cells to be sorted under an illuminated condition to obtain the cell image data of the cells to be sorted.
Step 406: acquiring, by the detection assembly, the cell image data of the cells to be sorted.

The cell image data of the cells to be sorted can include bright-field image data. The bright-field image data refers to a normally colored image captured when the cells to be sorted are illuminated with bright ambient light and no filter channel is used during imaging of the cells to be sorted. The optical path assembly is configured to form an optical path of the imaging mechanism. The optical path assembly includes optical elements forming the optical path, so as to realize imaging of the cells to be sorted. The detection assembly is configured to acquire the cell image data of the cells to be sorted formed through the optical path assembly.

Specifically, the sorting component is disposed between the imaging lighting unit and the optical path assembly. The imaging lighting unit provides a bright-field light source for the sorting component and the optical path assembly, irradiating the cells to be sorted with transmitted or reflected light. The transmitted light or the reflected light passes through the sorting component, enters the optical path assembly, and then reaches the detection assembly through the optical path assembly. The optical path assembly transmits the generated bright-field image data to the detection assembly, so that the detection assembly acquires the bright-field image data of the cells to be sorted. The detection assembly is connected to the terminal and sends the bright-field image data of the cells to be sorted to the terminal for display.

In an embodiment, the imaging lighting unit includes an imaging light source, a light shielding member, and a light transmitting member. The picking mechanism of the cell sorting device includes an aspirating-and-releasing member configured to aspirate and release the cell meeting the preset sorting condition. The light emitted by the imaging light source arrives the cells to be sorted through the light shielding member and the light transmitting member, so that the cells to be sorted are illuminated along the periphery of the aspirating-and-releasing member. It can be understood that the position of the imaging light source can be set according to the actual situation.

Optionally, the imaging light source is a ring-shaped light source, which provides bright and uniform illumination for a large field of view. Further, the imaging light source can include, but is not limited to, a light emitting diode (LED) light source. The ring-shaped LED light source can be a continuous ring-shaped light source, or can be formed by multiple light sources arranged circumferentially at uniform intervals, such that the imaging light source illuminates the region of the cells to be sorted from the radial periphery of the aspirating-and-releasing member.

Optionally, the brightness of the imaging light source is adjustable, making the imaging light source suitable for more cell sorting scenes and facilitating brightness adjustment of the image data.

In this embodiment, the imaging lighting unit provides illumination for the sorting component and the optical path assembly, the optical path assembly images the cells to be sorted under the illuminated condition to form the image data of the cells to be sorted, and the detection assembly acquires the image data of the cells to be sorted, thereby enabling acquisition of a clear cell image.

In an embodiment, the imaging mechanism further includes a fluorescence assembly. The method further includes: irradiating, by the fluorescence assembly, the cells to be sorted to cause the cells to be sorted to emit fluorescence; imaging, by the optical path assembly, the cells to be sorted to acquire a fluorescence image of the cells to be sorted; and acquiring, by the detection assembly, the fluorescence image of the cells to be sorted.

The fluorescence image refers to an image with fluorescence characteristics captured when the cells to be sorted are illuminated with bright ambient light and a filter channel is used in imaging of the cells to be sorted.

Specifically, the fluorescence assembly and the optical path assembly are arranged on the same side of the cells to be sorted. The fluorescence assembly is configured to cause the cells to be sorted to emit fluorescence for acquiring fluorescence image data of the cells to be sorted. The fluorescence assembly includes an excitation light source and a filter unit. The excitation light source refers to a light source capable of causing the cells to be sorted to emit fluorescence. The cells to be sorted are irradiated with the excitation light source to cause the cells to be sorted to emit fluorescence. For example, the excitation light source can be a lamp (e.g., a xenon lamp or a mercury lamp), a laser (e.g., an argon laser), or a light emitting diode. The filter unit is a core component of the imaging mechanism to realize fluorescence imaging. The light emitted by the excitation light source is filtered by the filter unit to produce excitation light, thereby causing the cells to be sorted to emit fluorescence. The fluorescence passes through the optical path assembly, generating a fluorescence image which is transmitted to the detection assembly, allowing the detection assembly to acquire the fluorescence image of the cells to be sorted. The detection assembly is connected to the terminal and sends the fluorescence image of the cells to be sorted to the terminal.

In this embodiment, by irradiating the cells to be sorted with the fluorescence assembly, the cells to be sorted can be rapidly excited to emit fluorescence, thereby improving the efficiency of acquiring the fluorescence image of the cells to be sorted.

In an optional implementation of the above embodiment, the fluorescence assembly further includes a filter switching unit, and irradiating, by the fluorescence assembly, the cells to be sorted, to cause the cells to be sorted to emit fluorescence includes: switching among excitation lights of multiple wavelength bands by the filter switching unit in the fluorescence assembly; and irradiating the cells to be sorted respectively with the excitation lights of multiple wavelength bands, to cause the cells to be sorted to emit different fluorescent lights.

Specifically, the fluorescence assembly can include a plurality of filter units. The filter units are configured to respectively excite the cells to be sorted, which are previously subjected to specific screening using culture mediums containing preset types of fluorescent dyes, to emit fluorescence. The preset types of fluorescent dyes can include a fluorescent dye capable of generating blue fluorescent light, a fluorescent dye capable of generating green fluorescent light, and a fluorescent dye capable of generating red fluorescent light. For example, the fluorescent dye capable of generating blue fluorescent light can be a DAPI fluorescent dye, the fluorescent dye capable of generating red fluorescent light can be a TRITC fluorescent dye, and the fluorescent dye capable of generating green fluorescent light can be a FITC fluorescent dye.

The type of filter unit corresponds to the type of fluorescent dye. The filter units can include a first filter unit, a second filter unit, and a third filter unit. Excitation light passing through the first filter unit causes the cells to be sorted to emit a first fluorescent light; excitation light passing through the second filter unit causes the cells to be sorted to emit a second fluorescent light; and excitation light passing through the third filter unit causes the cells to be sorted to emit a third fluorescent light. Specifically, the cells to be sorted are subjected to specific screening using a culture medium containing the fluorescent dye capable of generating blue fluorescence, the fluorescent dye capable of generating green fluorescence, and the fluorescent dye capable of generating red fluorescence. The shorter-wavelength light can excite emission of longer-wavelength light. Therefore, ultraviolet excitation produces blue light, blue light excitation produces green light, and green light excitation produces red light. An ultraviolet filter unit is selected for the cells to be sorted cultured with the fluorescent dye capable of generating blue fluorescence. The excitation light causes the cells to be sorted to emit blue fluorescence, then the blue fluorescence passes through the optical path assembly, so that a DAPI fluorescence image is generated by the optical path assembly. A blue-light filter unit is selected for the cells to be sorted cultured with the fluorescent dye capable of generating green fluorescence. The excitation light causes the cells to be sorted to emit green fluorescence, then the green fluorescence passes through the optical path assembly, so that a green fluorescence image (i.e., a FITC fluorescence image) is generated by the optical path assembly. A green-light filter unit is selected for the cells to be sorted cultured with the fluorescent dye capable of generating red fluorescence. The excitation light causes the cells to be sorted to emit red fluorescence, then the red fluorescence passes through the optical path assembly, so that a TRITC fluorescence image is generated by the optical path assembly. The cells to be sorted are subjected to specific screening with preset types of fluorescent dyes, which facilitating more accurate sorting of cells that meet preset conditions. It can be understood that different filter units are selected according to different fluorescent dyes, and the types of the fluorescent dyes and filter units are not limited.

By switching different filter units via the filter switching unit, excitation lights of different wavelength bands are obtained. The excitation light of each wavelength band can excite the cells to be sorted to emit a specific fluorescent light, so that the imaging mechanism can meet the culture needs of the cells to be sorted in various cases, and the applicability of the cell sorting device can be increased.

In this embodiment, the cells to be sorted are irradiated with the excitation lights of multiple wavelength bands, causing the cells to be sorted to emit different fluorescent lights, so as to obtain various fluorescence images of the cells to be sorted, so that the cells to be sorted can be accurately located according to the fluorescence signal characteristics of the cells.

In an embodiment, the terminal can further acquire and display the bright-field image data of the cells to be sorted from the cell sorting device. The bright-field image data is used to determine whether the cell sorting is successful. The bright-field image data refers to a normally colored image captured when the cells to be sorted are illuminated with bright ambient light and no filter unit is used during imaging of the cells to be sorted.

Further, the imaging mechanism of the cell sorting device includes the imaging lighting unit. The sorting component is disposed between the imaging lighting unit and the optical path assembly. The imaging lighting unit provides a bright-field light source for the sorting component and the optical path assembly, irradiating the cells to be sorted with transmitted or reflected light. The transmitted light or the reflected light passes through the sorting component, enters the optical path assembly, and then reaches the detection assembly through the optical path assembly. The optical path assembly transmits the generated bright-field image data to the detection assembly, so that the detection assembly acquires the bright-field image data of the cells to be sorted. The detection assembly is connected to the terminal and sends the bright-field image data of the cells to be sorted to the terminal for display.

In an embodiment, the imaging lighting unit includes the imaging light source, the light shielding member, and the light transmitting member. The picking mechanism of the cell sorting device includes the aspirating-and-releasing member configured to aspirate and release the cell meeting the preset sorting condition. The light emitted by the imaging light source arrives the cells to be sorted through the light shielding member and the light transmitting member, so that the cells to be sorted are illuminated along the periphery of the aspirating-and-releasing member. It can be understood that the position of the imaging light source can be set according to the actual situation.

In an embodiment, the detection assembly includes a bright-field image data detector and a fluorescence image data detector. The bright-field image data detector is configured to detect image data based on the transmitted light or reflected light generated from the light of the imaging light source passing through the cells to be sorted. The fluorescence image data detector is configured to detect image data based on the fluorescence emitted by the cells to be sorted.

The specific operation for acquiring the bright-field image data of the cells to be sorted is as follows: The imaging lighting unit is turned on. The light emitted by the imaging light source is allowed to pass through the cells to be sorted, the objective lens, the filter unit, and a first imaging lens in imaging lenses before entering the bright-field image data detector. The bright-field image data detector transmits the acquired image data of the cells to be sorted to the terminal. Based on the image data displayed on the terminal, the objective lens movement unit is controlled to move the objective lens to make the image data of the cells to be sorted clear.

The specific operation for acquiring the fluorescence image data of the cells to be sorted is as follows: The imaging light source is turned off, and the excitation light source is turned on. The light emitted by the excitation light source is allowed to pass through the filter unit and the objective lens before reaching the cells to be sorted, causing the cells to be sorted which have been subjected to specific screening with a fluorescent dye to emit fluorescence. The fluorescence passes through the objective lens, the filter unit, and a second imaging lens in the imaging lenses before entering the fluorescence image data detector. The fluorescence image data detector transmits the fluorescence image data of the cells to be sorted to the terminal. Based on the image data displayed on the terminal, the objective lens movement unit is controlled to move the objective lens to make the image data clear. The above operation is repeated with different filter units switched through the filter switching unit, so that different fluorescence image data of the cells to be sorted is transmitted to the terminal. The terminal can find the cell meeting the preset sorting condition based on the fluorescence image data.

Optionally, the switching between the imaging light source and the excitation light source can be realized by using the control mechanism in the cell sorting device, or can be realized by manual switching.

Optionally, the sorting component can be automatically moved under the control of the control mechanism. The fluorescence assembly includes different filter units. The filter unit can be automatically switched by the filter switching unit. The objective lens movement unit can realize automatic focusing, so as to realize automatic scanning of the imaging mechanism, thereby automatically scanning and imaging a large number of cells to be sorted, which greatly improves the working efficiency of the cell sorting device and expands its application range.

In an embodiment, as shown in FIG. 5, the cell sorting device includes the picking mechanism. The picking mechanism includes the aspirating-and-releasing member. The method further includes steps of calibrating the picking mechanism before acquiring the cell image data of the cells to be sorted. The steps of calibrating the picking mechanism include:
Step 502: acquiring image data of the aspirating-and-releasing member, and determining a clarity degree of the image data of the aspirating-and-releasing member through a calibration program.
Step 504: moving the aspirating-and-releasing member according to the clarity degree through the calibration program to obtain an aspirating-and-releasing member image with an optimal clarity degree.
Step 506: adjusting position data of the aspirating-and-releasing member in the aspirating-and-releasing member image through the calibration program until a preset condition is met, and storing a current position data of the aspirating-and-releasing member.

The image data of the aspirating-and-releasing member refers to the image data of a projection of the aspirating-and-releasing member.

Specifically, the imaging mechanism in the cell sorting device acquires the image data of the aspirating-and-releasing member, and sends the acquired image data of the aspirating-and-releasing member to the terminal. The terminal displays the image data of the aspirating-and-releasing member, and determines the clarity degree of the image data through the calibration program.

The aspirating-and-releasing member is provided with a hollow pipe, allowing a cell to enter and be stored in the aspirating-and-releasing member. The size of the aspirating-and-releasing member along the radial direction of the aspirating-and-releasing member can gradually decrease, forming an aspirating-and-releasing opening at one end of the aspirating-and-releasing member. The size of the aspirating-and-releasing opening matches the size of the cell to be aspirated. During aspiration, the cell enters the hollow pipe through the aspirating-and-releasing opening; and during release, the cell is released through the aspirating-and-releasing opening from the hollow pipe. The design of the aspirating-and-releasing opening facilitates accurate and effective cell aspiration, thereby improving the sorting efficiency of the cell sorting device. The material and the size of the aspirating-and-releasing member can be selected according to the sizes of the cells to be sorted. For example, the aspirating-and-releasing member can be a 1-millimeter glass capillary tube.

Further, the picking mechanism can include a mounting assembly, a picking movement assembly, a picking lighting unit, a cleaning assembly, and a recovery assembly. The mounting assembly is configured to mount and fix the aspirating-and-releasing member, to prevent the aspirating-and-releasing member from falling off during use. Correspondingly, the mounting assembly can also be configured to replace the aspirating-and-releasing member. The picking movement assembly is configured to drive the aspirating-and-releasing member to move relative to the main body. The picking movement assembly includes a picking driving member, a picking transmission member, and a picking movement member. Under the drive of the picking driving member and the rotation of the picking transmission member, the picking movement member drives the aspirating-and-releasing member to move. The cleaning assembly is configured to clean the aspirating-and-releasing member before use, so that the cells can be viable during the cell aspiration and release without affecting the normal state of the cells. The recovery assembly is configured to aspirate and release the cell meeting the preset sorting condition.

The picking mechanism is configured to pick the cell meeting the preset sorting condition from the sorting component. The automated configuration of the picking mechanism enables automatic cell aspiration, thereby improving the efficiency of cell sorting, avoiding damage to cells by manual operation, facilitating high-throughput cell sorting, and further enabling single-cell sorting.

The picking lighting unit is connected to the mounting assembly and is located at an end of the aspirating-and-releasing member away from the carrier mechanism. The picking lighting unit includes a picking light source connected to the control mechanism. The light emitted by the picking light source can pass through the hollow pipe of the aspirating-and-releasing member to form a projection of the aspirating-and-releasing member, thereby facilitating positioning of the aspirating-and-releasing member.

In an embodiment, acquiring the image data of the aspirating-and-releasing member includes: when the light emitted by the picking light source passes through the hollow pipe of the aspirating-and-releasing member to form the projection of the aspirating-and-releasing member, identifying the projection of the aspirating-and-releasing member through an imaging mechanism to acquire the image data of the aspirating-and-releasing member; and acquiring and displaying the image data of the aspirating-and-releasing member sent by the imaging mechanism.

Specifically, the control mechanism controls the picking light source to emit light, and the light passes through the hollow pipe of the aspirating-and-releasing member, and exits the aspirating-and-releasing member through the aspirating-and-releasing opening. The projection of the aspirating-and-releasing member is formed by the light exits the aspirating-and-releasing opening. The image data of the projection of the aspirating-and-releasing member (such as a circular aperture) is acquired through the imaging mechanism and sent to the terminal for display. The terminal performs image edge detection on the image data of the aspirating-and-releasing member through the calibration program to obtain the clarity degree of the image data of the aspirating-and-releasing member. The purpose of edge detection is to extract the edge information in the image, that is, the boundary between pixels in the image. It can be understood that the method of image edge detection can be an edge detection method known to those skilled in the art.

The calibration program controls the picking movement assembly to move the aspirating-and-releasing member according the clarity degree of the image data of the aspirating-and-releasing member, and determines the clarity degree of the image data of the aspirating-and-releasing member again. The steps of moving the aspirating-and-releasing member and acquiring the image data of the aspirating-and-releasing member are repeated until the aspirating-and-releasing member image with an optimal clarity degree is obtained.

The preset condition refers to a position calibration condition of the aspirating-and-releasing member.

After moving the aspirating-and-releasing member to obtain the aspirating-and-releasing member image with the optimal clarity degree, the position data of the aspirating-and-releasing member is adjusted by the calibration program until the aspirating-and-releasing member is located at a preset position in the image. For example, the preset position can be the position of a cross cursor. The aspirating-and-releasing member is displayed as a circular aperture in the image, and the center of the circular aperture can be adjusted to the position of the cross cursor. At this time, the current position data of the aspirating-and-releasing member is recorded and stored. In the subsequent cell sorting process, by using this position as a reference, the control mechanism controls the picking movement assembly to move the aspirating-and-releasing member, so as to aspirate the cell meeting the preset sorting condition.

In this embodiment, the clarity degree of the image data of the aspirating-and-releasing member is determined through the calibration program, the aspirating-and-releasing member is moved according to the clarity degree through the calibration program to obtain the aspirating-and-releasing member image with the optimal clarity degree, the position data of the aspirating-and-releasing member in the aspirating-and-releasing member image is adjusted through the calibration program until the preset condition is met, and the current position data of the aspirating-and-releasing member is stored. By automatically calibrating the position of the aspirating-and-releasing member through the calibration program, the aspirating-and-releasing member can accurately and quickly aspirate the cell meeting the preset sorting condition, thereby improving the efficiency and accuracy of cell sorting. In addition, the method can avoid damage to the aspirating-and-releasing member and the cell meeting the preset sorting condition caused by manual operation, thereby ensuring the biological activity of the cell meeting the preset sorting condition, and realizing high-throughput cell sorting.

In an embodiment, determining the clarity degree of the image data of the aspirating-and-releasing member through the calibration program includes: subjecting the image data of the aspirating-and-releasing member to an edge detection to acquire a brightness distribution of a plurality of boundary points in the image data; and determining the clarity degree of the image data of the aspirating-and-releasing member according to a preset image clarity evaluation relationship and the brightness distribution of the plurality of boundary points.

The boundary points refer to the boundary points in the pixel points in the image data.

The image data of the aspirating-and-releasing member can be subjected to a grayscale processing through the calibration program, to obtain a grayscale image. The grayscale image is subjected to the edge detection to obtain the brightness distribution of the boundary points in the image data. The brightness distribution reflects the change in image clarity degree.

There is a corresponding relationship between the brightness distribution of the boundary points and the clarity degree. The calibration program determines the clarity degree of the image data of the aspirating-and-releasing member according to the preset image clarity evaluation relationship and the obtained brightness distribution of the plurality of boundary points. For example, the preset image clarity evaluation relationship can be an image clarity evaluation function known to a person skilled in the art and is not limited as long as it can realize clarity evaluation based on brightness.

In this embodiment, the image data of the aspirating-and-releasing member is subjected to the edge detection to acquire the brightness distribution of the plurality of boundary points in the image data. Since the brightness distribution can represent the change in clarity degree, the clarity degree of the image data of the aspirating-and-releasing member can be obtained accurately and reliably according to the preset image clarity evaluation relationship.

In an embodiment, moving the aspirating-and-releasing member according to the clarity degree through the calibration program to obtain the aspirating-and-releasing member image with the optimal clarity includes: identifying a current position of the aspirating-and-releasing member in the image data of the aspirating-and-releasing member through the calibration program, and controlling the picking movement assembly to move the aspirating-and-releasing member according to the current position of the aspirating-and-releasing member; and returning to the step of acquiring the image data of the aspirating-and-releasing member, until the image data of the aspirating-and-releasing member reaches the optimal clarity degree, thereby obtaining the aspirating-and-releasing member image with the optimal clarity degree.

Specifically, the picking movement assembly includes the picking driving member, the picking transmission member, and the picking movement member. Under the drive of the picking driving member and the rotation of the picking transmission member, the picking movement member drives the aspirating-and-releasing member to move.

The aspirating-and-releasing member in the image data of the aspirating-and-releasing member is located through the calibration program to determine the current position of the aspirating-and-releasing member. According to the current position of the aspirating-and-releasing member, the control mechanism is instructed to control the drive of the picking driving member and the rotation of the picking transmission member. Under the drive of the picking driving member and the rotation of the picking transmission member, the picking movement member drives the aspirating-and-releasing member to move. The method is then returned to perform the step of acquiring the image data of the aspirating-and-releasing member, and determining the clarity degree of the image data of the aspirating-and-releasing member through the calibration program, until the clarity degree of the image data of the aspirating-and-releasing member is optimal, thereby obtaining the aspirating-and-releasing member image with the optimal clarity degree.

In this embodiment, the current position of the aspirating-and-releasing member is identified through the calibration program, and the aspirating-and-releasing member is moved according to the current position until the aspirating-and-releasing member image reaches the optimal clarity degree, ensuring that the aspirating-and-releasing member is located at the position to accurately aspirate the cell meeting the preset sorting condition without damaging the cell.

In an embodiment, the picking mechanism further includes the mounting assembly. The mounting assembly includes a fixing unit. The step of adjusting the position data of the aspirating-and-releasing member in the aspirating-and-releasing member image through the calibration program until the preset condition is met, and storing the current position data of the aspirating-and-releasing member includes: identifying the position data of the aspirating-and-releasing member in the aspirating-and-releasing member image through the calibration program; and controlling the fixing unit to perform fine adjustment of the aspirating-and-releasing member through the calibration program based on the position data, such that the position data of the aspirating-and-releasing member correspond to a preset position in the aspirating-and-releasing member image, and storing the current position data of the aspirating-and-releasing member as a calibration value.

Specifically, the fixing unit can include a first fixing member and a second fixing member. The location of the aspirating-and-releasing member in the image data of the aspirating-and-releasing member is determined through the calibration program to identify the position data of the aspirating-and-releasing member. The control mechanism is instructed to control the first fixing member and the second fixing member to perform fine adjustment of the aspirating-and-releasing member based on the current position of the aspirating-and-releasing member, such that the position data of the aspirating-and-releasing member correspond to the preset position of the aspirating-and-releasing member image. The preset position can be the position of a cross cursor. At this time, the current position data of the aspirating-and-releasing member is recorded and stored as the calibration value. In the subsequent cell sorting process, by using this position as a reference, the control mechanism controls the picking movement assembly to move the aspirating-and-releasing member, so as to aspirate the cell meeting the preset sorting condition.

In this embodiment, the position data of the aspirating-and-releasing member in the aspirating-and-releasing member image is identified through the calibration program, and based on the position data, the fixing unit is controlled to perform fine adjustment of the aspirating-and-releasing member, such that the position data of the aspirating-and-releasing member correspond to the preset position in the aspirating-and-releasing member image, thereby further improving the calibration accuracy of the aspirating-and-releasing member.

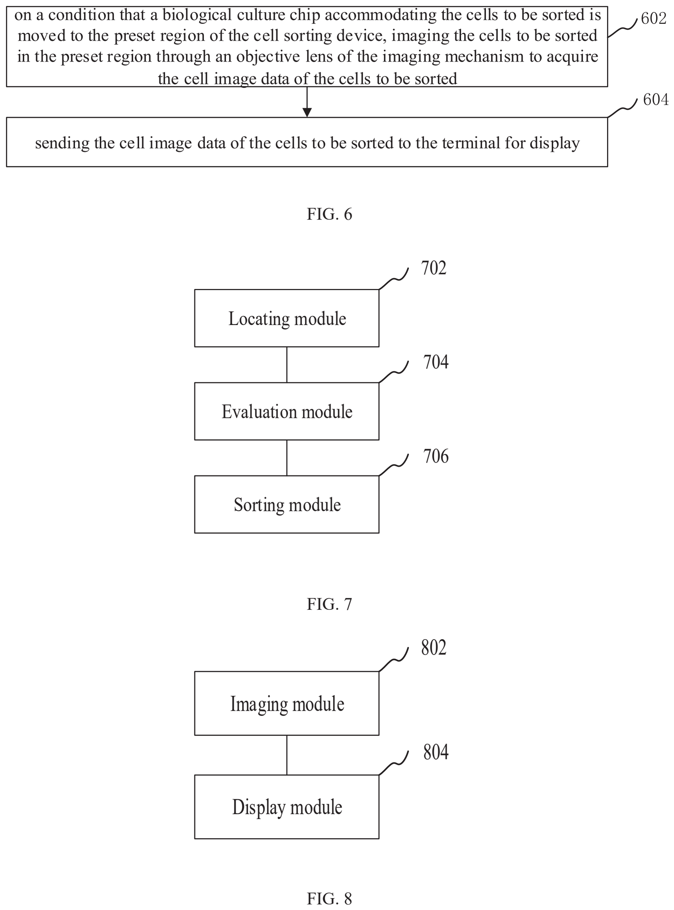

In another embodiment, as shown in FIG. 6, a cell display method is provided. The cell display method includes the following steps.

Step 602: on a condition that a biological culture chip accommodating the cells to be sorted is moved to the preset region of the cell sorting device, imaging the cells to be sorted in the preset region through an objective lens of the imaging mechanism to acquire the cell image data of the cells to be sorted.

Step 604: sending the cell image data of the cells to be sorted to the terminal for display.

The biological culture chip refers to a biological culture chip that has been subjected to cell specific screening.

Specifically, when the sorting component is the biological culture chip that has been subjected to cell specific screening, the biological culture chip accommodating the cells to be sorted is placed on the carrier mechanism of the cell sorting device. The carrier mechanism includes the carrier assembly. The carrier assembly includes the first carrier and the second carrier. The first carrier is configured to carry the biological culture chip accommodating the cells to be sorted. The second carrier is configured to carry the first carrier. The second carrier is movable relative to the base of the main body under the drive of the carrier movement assembly, thereby moving the biological culture chip to the preset region relative to the base of the main body.

The imaging mechanism of the cell sorting device includes the optical path assembly. The optical path assembly includes the objective lens and the imaging lens. The objective lens has a specific focal length. When the biological culture chip accommodating the cells to be sorted moves to the preset region of the cell sorting device, the objective lens in the optical path assembly images the cells to be sorted in the preset region. Then the image data of the cells to be sorted acquired by the optical path assembly is sent to the terminal, and the terminal displays the image data of the cells to be sorted. For example, the objective lens can be a 10X objective lens. It should be noted that, the magnification of the objective lens can be set according to actual needs, and is not limited herein.

Optionally, the optical path assembly can include a plurality of objective lenses to acquire image data of the cells to be sorted under different magnifications.

In an embodiment, the biological culture chip is relatively thin and made of a soft and fragile material, making it difficult to directly fix the biological culture chip in the cell sorting device. Therefore, the cell sorting device further includes a chip fixing assembly. The chip fixing assembly can be placed on the carrier mechanism. The chip fixing assembly includes a chip accommodation member configured to accommodate the biological culture chip. The biological culture chip is first fixed in the chip accommodation member, and then the chip accommodation member is placed on the carrier mechanism of the cell sorting device.

Further, to ensure normal use of the biological culture chip in the cell sorting device, the cell sorting device further includes a fixing mechanism. The fixing mechanism includes a chip fixing assembly and a carrier limiting assembly. The chip fixing assembly is configured to fix the biological culture chip in the chip accommodation member. The carrier limiting assembly is configured to fix the chip accommodation member on the carrier mechanism. The sorting efficiency and sorting accuracy of the cell sorting device can be improved by using the biological culture chip.

In this embodiment, the biological culture chip can fully utilize microscopy or nanotechnology to complete accurate control such as cell capture, fixation, and culture on the chip, which is beneficial to improving the accuracy of cell sorting. In addition, since the terminal can visually display the cells to be sorted, which is convenient for adjusting the clarity of the image, the efficiency of cell sorting can be improved.

In an embodiment, the biological culture chip includes a plurality of accommodation cavities accommodating the cells to be sorted, and the adjacent accommodation cavities are spaced apart by a preset distance.

Specifically, the biological culture chip can include a substrate and the accommodation cavities. The substrate is made of a substrate material. The accommodation cavities are formed on a surface of the substrate, forming openings on the surface of the substrate. Each accommodation cavity defines a biological culture space for culturing a cellular biological material. The structure and the size of the accommodation cavities are not particularly limited, as long as they can provide space for culturing or growth amplification of single cells. The accommodation cavities can have a structure of cuboid, cube, or cylinder.

Optionally, the substrate material is a microporous soft material having good biocompatibility, cell culture medium compatibility, and mechanical tension, so that the cells (including single cells and controllable numbers of aggregated multicellular clusters) can be captured and cultured more efficiently. The soft substrate has high affinity and can fuse with different extracellular matrix environments, providing cells with a three-dimensional culture space, thereby creating a microenvironment favorable for survival, proliferation, migration, protein expression and secretion, stem cell differentiation, and detection of biological functions of arrayed cells in a two-dimensional array. It should be noted that the specific type of the substrate material is not particularly limited, and hard substrate materials such as glass, silicon wafers, or plastics also fall within the protection scope of the present application.

Optionally, the diameter of the opening of the accommodation cavity is less than the diameter of the bottom of the accommodation cavity, which facilitates the capture and culture of a single cell while preventing cell escape during the culture process. For example, the opening diameter of the accommodation cavity is at most 80% of the bottom diameter of the accommodation cavity. For example, the opening diameter of the accommodation cavity can be 50% of the bottom diameter of the accommodation cavity. The term "diameter" refers to the diameter of the largest circle that can be accommodated by the opening or the bottom in terms of area. The opening diameter of the accommodation chamber can be 8 micrometers to 25 micrometers, and the depth of the accommodation chamber can be 15 micrometers to 35 micrometers. It should be noted that, different opening diameters may be set for different cells. For example, the biological material is B-cells, and the opening diameter is in a range from 8 micrometers to 12 micrometers; alternatively, the biological material is hybridoma cells or tumor cells, and the opening diameter is in a range from 15 micrometers to 25 micrometers.

Optionally, the accommodation cavities in the biological culture chip are discretely distributed, and each two adjacent accommodation cavities are spaced apart by a preset distance. The accommodation cavities form a predetermined pattern, and a distance between two adjacent accommodation cavities is in a range from 10 micrometers to 100 micrometers, which allows batch processing of the culture of a plurality of single cells. When the distance between the accommodation cavities ranges from 10 micrometers to 100 micrometers, the cells cultured in the accommodation cavities do not interfere with each other between the accommodation cavities, thereby improving the uniformity of batch processing, increasing the accuracy and efficiency of cell biological function detection, and facilitating high-throughput acquisition and analysis of cell signaling data. The accommodation cavities in the biological culture chip can form an array; for example, a single chip may contain an array of tens of thousands of accommodation cavities or even hundreds of thousands of or more accommodation cavities.

In this embodiment, the cells to be sorted are accommodated in the accommodation cavities spaced apart by the preset distance, so that batch processing of the culture of a plurality of single cells can be performed, and the cells in different accommodation cavities do not interfere with each other, thereby improving the accuracy and efficiency of cell culture and subsequent cell picking.

In an embodiment, a specific screening process for cells using the biological culture chip is as follows.

Place the chip into the chip accommodation member. Since the biological culture chip needs to be stored in a low-temperature environment (e.g., 0 °C to 5 °C) for preservation, the biological culture chip should be allowed to stand at room temperature for a period of time before use to return to room temperature. As the biological culture chip is relatively thin and made of a soft and fragile material, it is usually placed in the chip accommodation member. After the exterior of the chip accommodation member accommodating the biological culture chip is disinfected and sterilized, the chip accommodation member accommodating the biological culture chip is transferred to a sterile environment. The chip preservation solution is then removed using a pipette, and the chip is washed multiple times with sterile phosphate buffered solution (PBS) having a concentration of 0.01 M. It should be noted that the biological culture chip is not touched during the washing process.

Add cells. The cells to be sorted prepared in advance are added to the chip accommodation member accommodating the biological culture chip. Preferably, to ensure optimal efficiency for arraying single cells, the ratio of cell number to the throughput of the chip is in a range from 5:1 to 10:1, and the volume of the cell suspension solution is 1.5 ml. For example, when the throughput of the chip is 100,000, a cell suspension solution containing 500,000 to 1 million cells is used for arraying. The chip is then allowed to stand in a cell culture incubator for a preset time, such as 15 minutes, so that the cells to be sorted form an array in the biological culture chip having an array of accommodation cavities.

First separation. After the array formation, the cell suspension solution is recovered by using a pipette, and then the chip is washed multiple times with 0.01 M PBS to remove residual cells. The chip accommodation member can be slightly tilted during washing, and the entire process should be performed gently to separate cells that have not formed the array. After washing, the chip with the cell array is observed under a microscope to assess the array formation.

Prepare a screening culture medium. A complete cell culture medium is prepared in advance. The preset types of fluorescent dyes are added to the complete cell culture medium respectively at the required dilution ratios, shaken at a low speed and fully mixed. Depending on requirements, a substance such as an antigen pre-labeled with a fluorescent dye is added to the thoroughly mixed complete cell culture medium at a specific dilution ratio, shaken at a low speed and fully mixed to obtain the screening culture medium.

Add the screening culture medium. The screening culture medium prepared in advance is added to the chip with the cell array, and the chip with the cell array is then placed in a cell incubator for incubation, allowing the substances in the screening culture medium to specifically bind to the secreted substances of the arrayed cells to be sorted. The incubation time is set according to the specific project, for example, ranges from 3 hours to 8 hours for a cell line development project, and is not less than 8 hours for an antibody discovery project.

Second separation. When the incubation is complete, the screening culture medium is recovered, and the chip is washed 3-5 times with 0.01 M PBS buffer until substantially all suspended cells are removed. The biological culture chip then accommodating the cells to be sorted that have been cultured with the fluorescent dyes.

In an embodiment, after acquiring the image data of the cells to be sorted accommodated in the biological culture chip, the terminal locates the accommodation cavities in the image data of the cells to be sorted through the deep learning model based on a pre-set locating mark of each accommodation cavity in the biological culture chip, and then locates the cells to be sorted in the located accommodation cavities.

Specifically, the biological culture chip includes locating marks formed on the substrate, and thus the plurality of accommodation cavities can be located through the locating marks. The form of the locating marks is not particularly limited. For example, coordinate lines can be provided to locate each accommodation cavity. Once a cell meeting the preset sorting condition is observed, the accommodation cavity accommodating the cell meeting the preset sorting condition can be quickly located and recorded, further facilitating the subsequent separation of the cell meeting the preset sorting condition or other components from the accommodation cavity.

In an embodiment, during the imaging process, the optical path assembly in the imaging mechanism adjusts the distance between the objective lens and the biological culture chip to focus the objective lens and image the cells to be sorted. By varying the distance between the objective lens and the biological culture chip, clear imaging of the cells to be sorted is achieved, allowing and the imaging mechanism to acquire clear image data of the cells to be sorted.

Further, the picking mechanism includes a mounting assembly, a picking movement assembly, and a recovery assembly that are mounted on the main body of the cell sorting device. The mounting assembly is configured to mount the aspirating-and-releasing member. The picking movement assembly is configured to drive the aspirating-and-releasing member to move, allowing the aspirating-and-releasing member is move toward or away from the carrier mechanism. The recovery assembly is connected to the aspirating-and-releasing member, enabling the aspirating-and-releasing member to aspirate the cell meeting the preset sorting condition. This arrangement can realize automatic aspiration of the cell meeting the preset sorting condition, thereby improving cell sorting efficiency.

Furthermore, the recovery assembly includes a drive unit, a communication member, and a passage connection member. The aspirating-and-releasing member includes a hollow pipe. Under the control of the control mechanism, the picking movement assembly drives the aspirating-and-releasing opening of the aspirating-and-releasing member to move to a preset position, at which a preset distance exists between the aspirating-and-releasing opening and the cell meeting the preset sorting condition. The control mechanism controls the drive unit to generate a pressure difference at the aspirating-and-releasing opening of the aspirating-and-releasing member, thereby aspirating the cell meeting the preset sorting condition into the hollow pipe, completing the aspiration of the cell meeting the preset sorting condition. The preset distance is a distance at which the aspirating-and-releasing member can successfully aspirate the cell meeting the preset sorting condition into the hollow pipe.

Further, the picking mechanism further includes a picking lighting unit. The picking lighting unit is connected to the mounting assembly and is located at an end of the aspirating-and-releasing member away from the first carrier. The light emitted by the picking lighting unit can pass through the aspirating-and-releasing member. The arrangement of the picking lighting unit enables the calibration of the aspirating-and-releasing member and the acquisition of the position of the aspirating-and-releasing member, facilitating accurate aspiration of the cell meeting the preset requirement by the aspirating-and-releasing member, thereby improving the accuracy of cell sorting.

In an embodiment, the carrier assembly further includes a storage unit disposed on the first carrier. The storage unit is configured to accommodate and hold the cell meeting the preset sorting condition, to facilitate subsequent culture of the cell meeting the preset sorting condition. When the cell meeting the preset sorting condition is aspirated by the picking mechanism, it can be placed into the storage unit. The storage unit is then transferred to an incubator, for the next stage of culture on the cell meeting the preset sorting condition.

In an embodiment, during the cell sorting process, the operation method of the cell sorting device includes the following steps.

Mount the aspirating-and-releasing member to the mounting assembly of the picking mechanism.

Calibrate the position of the aspirating-and-releasing member. Specifically, under the control of the control mechanism, the picking light source is turned on, and the picking movement assembly drives the aspirating-and-releasing member to move until the image data of the projection of the aspirating-and-releasing member is clearly displayed on the terminal. The aspirating-and-releasing member is subjected to perform fine adjustment by using the first fixing member and the second fixing member, so that the projection marker is located at the preset position of the projection of the aspirating-and-releasing member. Then, the sorting component without cells to be sorted is placed into a fixing groove of the first carrier. The picking movement assembly drives the aspirating-and-releasing member to move until the image data of the aspirating-and-releasing opening is clearly displayed on the terminal. The position information of the aspirating-and-releasing member at this moment is recorded, thereby completing the position calibration of the aspirating-and-releasing member.

Perform first cleaning of the aspirating-and-releasing member with a cleaning solution.

Place the sorting component and the storage unit. The sorting component accommodating the cells to be sorted is placed into a mounting portion of the first carrier, and an elastic member on one side of the mounting portion is pulled to the other side of the mounting portion, so that the elastic member is biased against the sorting component, thereby achieving placement and fixation of the sorting component on the first carrier. The storage unit containing an appropriate amount of culture medium is placed into a placement groove of the first carrier.

Identify a cell meeting the preset sorting condition. Under the control of the control mechanism, the imaging light source is turned on, the objective lens movement unit drives the objective lens to move until image data of the cells to be sorted for observation is clearly displayed on the terminal, and the bright-field image data of the cells to be sorted are recorded. The imaging light source is then turned off, the excitation light source is turned on, allowing the light emitted by the excitation light source to pass through the first filter unit and cause the cells to be sorted to emit a first fluorescent light. The image data of the first fluorescent light emitted by the cells to be sorted are recorded. The filter switching unit is controlled to switch to the second filter unit, causing the cells to be sorted to emit a second fluorescent light. The image data of the second fluorescent light emitted by the cells to be sorted are recorded. The filter switching unit is controlled to switch to the third filter unit, causing the cells to be sorted to emit a third fluorescent light. The image data of the third fluorescent light emitted by the cells to be sorted are recorded. Then, the excitation light source is turned off, and the imaging light source is turned on. The sorting component is driven to move to a preset area to switch to the next cells to be sorted for observation. The foregoing process is repeated to record bright-field image data and fluorescence image data of the cells to be sorted in different regions. The acquired bright-field image data and fluorescence image data of the cells to be sorted are processed and analyzed to identify a cell meeting the preset sorting condition.

Aspirate and recover the cell meeting the preset sorting condition. Under the control of the control mechanism, the picking movement assembly drives the aspirating-and-releasing member to move until the aspirating-and-releasing member reaches a position at which the cell can be aspirated to complete pre-aspiration, and this position is calibrated as the preset position. The picking movement assembly drives the aspirating-and-releasing member to move to the preset position. The aspirating-and-releasing member is controlled to aspirate the cell into the hollow pipe of the aspirating-and-releasing member. The picking movement assembly drives the aspirating-and-releasing member to move in a direction away from the carrier assembly. The picking movement assembly drives the aspirating-and-releasing member to move, so that a preset distance exists between the aspirating-and-releasing opening and a storage portion of the storage unit. The preset distance is a distance for the aspirating-and-releasing member to release the cell meeting the preset requirement to the storage portion. The aspirating-and-releasing member is controlled to release the cell meeting the preset sorting condition from the hollow pipe into the storage portion. The picking movement assembly then drives the aspirating-and-releasing member to move in a direction away from the carrier assembly. The foregoing process is repeated, so that different cells meeting the preset sorting condition are aspirated, released, and recovered into different storage portions until the aspiration and release of all cells meeting the preset sorting condition in the sorting component are completed. The sorting component is recovered and stored, and the storage unit is transferred to an incubator for continued culture.

After cell sorting, perform second cleaning of the aspirating-and-releasing member with a cleaning solution.

In this embodiment, the cells meeting the preset sorting condition in the sorting component are selectively aspirated and released into the corresponding storage portions of the storage unit by using the cell sorting device. This process is automatically completed under the control of the control mechanism, thereby improving the efficiency of cell sorting, avoiding damage to the aspirating-and-releasing member and to the cells meeting the preset sorting condition caused by manual operation, ensuring biological activity of the cells meeting the preset sorting condition, and achieving high-throughput cell sorting.

It should be understood that, although the steps in the flowcharts relating to the above embodiments are sequentially displayed as indicated by the arrows, these steps are not necessarily sequentially performed as indicated by the arrows. Unless explicitly stated herein, these steps can be performed in other sequences without strict sequence limitations. Moreover, at least a part of the steps in the flowcharts relating to the above embodiments can include a plurality of steps or stages, and these steps or stages are not necessarily executed and completed at the same time, but can be executed at different times, and these steps or stages does not necessarily have to be executed sequentially, but can be executed in turn or alternately with other steps or at least a part of the steps or stages in other steps.

Based on the same inventive concept, an embodiment of the present application provides a cell sorting apparatus for implementing the cell sorting method described above. The implementation provided by the device for solving the problem is similar to the implementation described in the above method. Therefore, the specific limitations in one or more embodiments of the cell sorting apparatus provided below may refer to the limitations described in the cell sorting method, and details are not repeated herein.

In an embodiment, as shown in FIG. 7, a cell sorting apparatus is provided. The cell sorting device includes a locating module 702, an evaluation module 704 and a sorting module 706.

The locating module 702 is configured to locate cells to be sorted in cell image data through a deep learning model.

The evaluation module 704 is configured to evaluate fluorescence signal intensities of the cells to be sorted based on the cell image data.

The sorting module 706 is configured to aspirate a cell meeting a preset sorting condition from the cells to be sorted according to the fluorescence signal intensities of the cells to be sorted.

In an embodiment, the locating module 702 is further configured to: acquire the cell image data, input the cell image data into the deep learning model, extract fluorescence signal characteristics of the cell image data, and determine position data of the cells to be sorted in the cell image data according to the fluorescence signal characteristics.

In an embodiment, the evaluation module 704 is further configured to: cut the cells to be sorted out from the cell image data to obtain an image of the cells to be sorted, and subject the image of the cells to be sorted to a grayscale analysis to obtain the fluorescence signal intensities of the cells to be sorted.

In an embodiment, the evaluation module 704 is further configured to: subject the image of the cells to be sorted to a denoising processing; subject the image of the cells to be sorted after the denoising processing to a threshold segmentation; and subject the image of the cells to be sorted after the segmentation to a grayscale analysis to obtain the fluorescence signal intensities of the cells to be sorted.

In an embodiment, the apparatus further includes:
a comparison module, configured to identify, through the deep learning model, first position data of each cell in a first bright-field cell image before cell sorting and second position data of each cell in a second bright-field cell image after cell sorting, compare the first position data with the second position data, and determine that the cell sorting has failed if the comparison indicates consistency, and repeat the cell sorting steps.

The modules in the above cell sorting apparatus can be implemented, completely or partially, by software, hardware and a combination of software and hardware. The above modules can be embedded in or independent of a processor of a computer equipment in the form of hardware, or can be stored in a memory of the computer equipment in the form of software, for the processor to invoke and execute operations corresponding to the modules.

In an embodiment, as shown in FIG. 8, a cell display device is provided. The cell display device includes an imaging module 802 and a display module 804.

The imaging module 802 is configured to image cells to be sorted in a preset region to acquire cell image data of the cells to be sorted on a condition that a sorting component accommodating the cells to be sorted is moved to the preset region.

The display module 804 is configured to send the cell image data of the cells to be sorted to the terminal for display.

In an embodiment, the imaging mechanism includes an imaging lighting unit, an optical path assembly, and a detection assembly. The imaging module 802 is further configured to: provide, by the imaging lighting unit, illumination for the sorting component and the optical path assembly; image, by the optical path assembly, the cells to be sorted under an illuminated condition to acquire the image data of the cells to be sorted; and acquire, by the detection assembly, the image data of the cells to be sorted.

In an embodiment, the imaging mechanism further includes a fluorescence assembly. The imaging module 802 is further configured to: irradiate, by the fluorescence assembly, the cells to be sorted, to cause the cells to be sorted to emit fluorescence; image, by the optical path assembly, the cells to be sorted to acquire a fluorescence image of the cells to be sorted; and acquire, by the detection assembly, the fluorescence image of the cells to be sorted.

In an embodiment, the fluorescence assembly includes a filter switching unit. The imaging module 802 is further configured to: switch among excitation lights of multiple wavelength bands by the filter switching unit in the fluorescence assembly; and respectively irradiate the cells to be sorted with the excitation lights of multiple wavelength bands, to cause the cells to be sorted to emit different fluorescent lights.

In an embodiment, the display module 804 is further configured to: locate the cells to be sorted in the image data of the cells to be sorted through the deep learning model; evaluate fluorescence signal intensities of the cells to be sorted based on the image data; and aspirate a cell meeting a preset sorting condition from the cells to be sorted according to the fluorescence signal intensities of the cells to be sorted.

In an embodiment, the device further includes:
a clarity determining module, configured to acquire image data of an aspirating-and-releasing member, and determine a clarity degree of the image data of the aspirating-and-releasing member through a calibration program;
an adjustment module, configured to move the aspirating-and-releasing member according to the clarity degree through the calibration program to obtain an aspirating-and-releasing member image with an optimal clarity degree; and
a calibration module, configured to adjust position data of the aspirating-and-releasing member in the aspirating-and-releasing member image through the calibration program until a preset condition is met, and store a current position data of the aspirating-and-releasing member.

In an embodiment, the clarity determining module is further configured to: subject the image data of the aspirating-and-releasing member to an edge detection to acquire a brightness distribution of a plurality of boundary points in the image data; and determine the clarity degree of the image data of the aspirating-and-releasing member according to a preset image clarity evaluation relationship and the brightness distribution of the plurality of boundary points.

In an embodiment, the device further includes a picking movement assembly. The adjustment module is further configured to: identify a current position of the aspirating-and-releasing member in the image data of the aspirating-and-releasing member through the calibration program, and control the picking movement assembly to move the aspirating-and-releasing member according to the current position of the aspirating-and-releasing member; and return to the step of acquiring the image data of the aspirating-and-releasing member, until the image data of the aspirating-and-releasing member reaches the optimal clarity degree, thereby obtaining the aspirating-and-releasing member image with the optimal clarity degree.

In an embodiment, the device further includes a mounting assembly including a fixing unit. The calibration module is further configured to: identify the position data of the aspirating-and-releasing member in the aspirating-and-releasing member image through the calibration program; and control the fixing unit to perform fine adjustment of the aspirating-and-releasing member through the calibration program based on the position data, such that the position data of the aspirating-and-releasing member correspond to a preset position in the aspirating-and-releasing member image, and store the current position data of the aspirating-and-releasing member as a calibration value.

In an embodiment, the imaging module 802 is further configured to image the cells to be sorted in the preset region through an objective lens of the imaging mechanism to acquire the image data of the cells to be sorted on a condition that a biological culture chip accommodating the cells to be sorted is moved to the preset region of the cell sorting device; and the display module 804 is further configured to send the image data of the cells to be sorted to the terminal for display.

In an embodiment, the biological culture chip includes a plurality of accommodation cavities accommodating the cells to be sorted, and adjacent accommodation cavities are spaced apart by a preset distance.

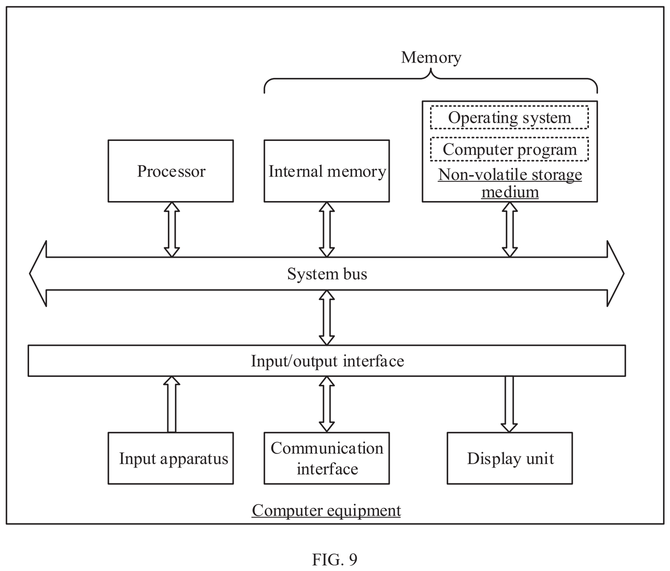

In an embodiment, a computer equipment is provided. The computer equipment can be a terminal, and its internal structure can be as shown in FIG. 9. The computer equipment includes a processor, a memory, an input/output interface, a communication interface, a display unit, and an input device. The processor, the memory, and the input/output interface are connected through a system bus. The communication interface, the display unit, and the input device are connected to the system bus through the input/output interface. The processor of the computer equipment is configured to provide computing and control capabilities. The memory of the computer equipment includes a non-volatile storage medium and an internal memory. The non-volatile storage medium stores an operating system and a computer program. The internal memory provides a running environment for the operating system and the computer program on the non-volatile storage medium. The input/output interface of the computer equipment is configured for information exchange between the processor and an external device. The communication interface of the computer equipment is used for communication with an external terminal in a wired or wireless manner. The wireless manner may be implemented by using Wi-Fi, a mobile cellular network, near field communication (NFC), or another technology. The computer program, when executed by the processor, implements a cell sorting method. The display unit of the computer equipment is configured to form a visible picture, and can be a display screen, a projection device, or a virtual reality imaging device. The display screen can be a liquid crystal display screen or an e-ink display screen. The input device of the computer equipment can be a touch layer covering the display screen, or can be a button, a trackball, or a touchpad disposed on a housing of the computer equipment, or can be an external keyboard, touchpad, mouse, or the like.

A person skilled in the art can understand that the structure shown in FIG. 9 is merely a block view of a portion of the structure related to the solution of the present application, and does not constitute a limitation to the computer equipment to which the solution of the present application is applied. A specific computer equipment can include more or fewer components than those shown in the figure, or have some components combined, or have a different component arrangement.

In an embodiment, a computer equipment is provided, including a memory and a processor. The memory stores a computer program, and the processor, when executing the computer program, implements the steps of the method embodiments described above.

In an embodiment, a computer-readable storage medium is provided, having a computer program stored thereon. The computer program, when executed by a processor, implements the steps of method embodiments described above.

In an embodiment, a computer program product is provided, including a computer program. The computer program, when executed by a processor, implements the steps of the method embodiments described above.

A person of ordinary skill in the art can understand that all or some of steps of the method in the embodiments can be implemented by a computer program instructing relevant hardware. The computer program can be stored in a non-volatile computer-readable storage medium. When the computer program is executed, the steps of the method embodiments described above can be performed. Any reference to the memory, database, or another medium used in the embodiments provided in the present application can include at least one of a non-volatile and a volatile memory. The non-volatile memory can include a read-only memory (ROM), a tape, a floppy disk, a flash memory, an optical memory, a high-density embedded non-volatile memory, a resistive random-access memory (ReRAM), a magnetoresistive random access memory (MRAM), a ferroelectric random access memory (FRAM), a phase change memory (PCM), a graphene memory, or the like. The volatile memory may include a random access memory (RAM) or an external cache memory, or the like. As an illustration but not a limitation, the RAM can be in various forms, such as a static random access memory (SRAM) or a dynamic random access memory (DRAM). The database in the embodiments provided in the present application can include at least one of a relational database and a non-relational database. The non-relational database can include a blockchain-based distributed database, or the like, which is not limited herein. The processor in the embodiments provided in the present application can be a general-purpose processor, a central processing unit, a graphics processor, a digital signal processor, a programmable logic device, a data processing logic device based on quantum computing, or the like, which is not limited herein.

The technical features of the embodiments above can be combined arbitrarily. To make the description concise, not all possible combinations of the technical features in the above embodiments are described. However, as long as there are no contradictions in the combinations of these technical features, all of the combinations should be considered to be within the scope of the specification.

The embodiments above only represent several implementation modes of the present application, and the description thereof is relatively specific and detailed, but it should not be construed as limiting the scope of the patent. It should be noted that for those skilled in the art, various modifications and improvements can be made without departing from the concept of the present application, and all these modifications and improvements belong to the protection scope of the present application. Therefore, the scope of protection of the patent application should be subject to the appended claims.

## Claims

1. A cell sorting method applied to a terminal, the method comprising:
acquiring cell image data sent from a cell sorting device;
locating cells to be sorted in the cell image data through a deep learning model;
evaluating fluorescence signal intensities of the cells to be sorted based on the cell image data; and
aspirating a cell meeting a preset sorting condition from the cells to be sorted according to the fluorescence signal intensities of the cells to be sorted.

2. The method according to claim **1,** wherein locating the cells to be sorted in the cell image data through the deep learning model comprises:
inputting the cell image data into the deep learning model, extracting fluorescence signal characteristics of the cell image data, and determining position data of the cells to be sorted in the cell image data according to the fluorescence signal characteristics.

3. The method according to claim 1, wherein evaluating the fluorescence signal intensities of the cells to be sorted based on the cell image data to obtain the fluorescence signal intensities of the cells to be sorted comprises:
cutting the cells to be sorted out from the cell image data to obtain an image of the cells to be sorted; and
subjecting the image of the cells to be sorted to a grayscale analysis to obtain the fluorescence signal intensities of the cells to be sorted.

4. The method according to claim 3, wherein subjecting the image of the cells to be sorted to the grayscale analysis to obtain the fluorescence signal intensities of the cells to be sorted comprises:
subjecting the image of the cells to be sorted to a denoising processing;
subjecting the image of the cells to be sorted after the denoising processing to a threshold segmentation; and
subjecting the image of the cells to be sorted after the segmentation to the grayscale analysis to obtain the fluorescence signal intensities of the cells to be sorted.

5. The method according to claim **1,** further comprising:
identifying, through the deep learning model, first position data of each cell in a first bright-field cell image before cell sorting and second position data of each cell in a second bright-field cell image after cell sorting;
comparing the first position data with the second position data; and
determining that the cell sorting has failed if the comparison indicates consistency, and returning to the step of locating the cells to be sorted in the cell image data through the deep learning model to continue the cell sorting.

6. A cell display method applied to a cell sorting device, the cell sorting device comprising an imaging mechanism, the method comprising:
on a condition that a sorting component accommodating cells to be sorted is moved to a preset region of the cell sorting device, imaging the cells to be sorted in the preset region by the imaging mechanism to acquire cell image data; and
sending the cell image data to a terminal for display.

7. The method according to claim 6, wherein the imaging mechanism comprises an imaging lighting unit, an optical path assembly, and a detection assembly; imaging the cells to be sorted in the preset region by the imaging mechanism to acquire the cell image data comprises:
providing, by the imaging lighting unit, illumination for the sorting component and the optical path assembly;
imaging, by the optical path assembly, the cells to be sorted under an illuminated condition; and
acquiring, by the detection assembly, the cell image data generated by the optical path assembly.

8. The method according to claim 6, wherein the imaging mechanism further comprises a fluorescence assembly, and the method further comprises:
irradiating, by the fluorescence assembly, the cells to be sorted to cause the cells to be sorted to emit fluorescence;
imaging, by the optical path assembly, the cells to be sorted to acquire a fluorescence image of the cells to be sorted; and
acquiring, by the detection assembly, the fluorescence image of the cells to be sorted.

9. The method according to claim 8, wherein the fluorescence assembly comprises a filter switching unit, and irradiating, by the fluorescence assembly, the cells to be sorted, to cause the cells to be sorted to emit fluorescence comprises:
Switching among excitation lights of multiple wavelength bands by the filter switching unit in the fluorescence assembly; and
irradiating the cells to be sorted respectively with the excitation lights of multiple wavelength bands, to cause the cells to be sorted to emit different fluorescent lights.

10. The method according to claim 6, wherein the cell sorting device comprises a picking mechanism, the picking mechanism comprises an aspirating-and-releasing member, the method further comprises steps of calibrating the picking mechanism before acquiring the cell image data, and the steps of calibrating the picking mechanism comprises:
acquiring image data of the aspirating-and-releasing member, and determining a clarity degree of the image data of the aspirating-and-releasing member through a calibration program;
moving the aspirating-and-releasing member according to the clarity degree through the calibration program to obtain a aspirating-and-releasing member image with an optimal clarity degree; and
adjusting position data of the aspirating-and-releasing member in the aspirating-and-releasing member image through the calibration program until a preset condition is met, and storing a current position data of the aspirating-and-releasing member.

11. The method according to claim 10, wherein determining the clarity degree of the image data of the aspirating-and-releasing member through the calibration program comprises:
subjecting the image data of the aspirating-and-releasing member to an edge detection to acquire a brightness distribution of a plurality of boundary points in the image data; and
determining the clarity degree of the image data of the aspirating-and-releasing member according to a preset image clarity evaluation relationship and the brightness distribution of the plurality of boundary points.

12. The method according to claim 10, wherein the picking mechanism further comprises a picking movement assembly, and moving the aspirating-and-releasing member according to the clarity degree through the calibration program to obtain the aspirating-and-releasing member image with the optimal clarity degree comprises:
identifying a current position of the aspirating-and-releasing member in the image data of the aspirating-and-releasing member through the calibration program, and controlling the picking movement assembly to move the aspirating-and-releasing member according to the current position of the aspirating-and-releasing member; and
returning to the step of acquiring the image data of the aspirating-and-releasing member until the image data of the aspirating-and-releasing member reaches the optimal clarity degree, thereby obtaining the aspirating-and-releasing member image with the optimal clarity degree.

13. The method according to claim 10, wherein the picking mechanism further comprises a mounting assembly, and the mounting assembly comprises a fixing unit; adjusting the position data of the aspirating-and-releasing member in the aspirating-and-releasing member image through the calibration program until the preset condition is met, and storing the current position data of the aspirating-and-releasing member comprises:
identifying the position data of the aspirating-and-releasing member in the aspirating-and-releasing member image through the calibration program; and
controlling the fixing unit to perform fine adjustment of the aspirating-and-releasing member through the calibration program based on the position data, such that the position data of the aspirating-and-releasing member correspond to a preset position in the aspirating-and-releasing member image, and storing the current position data of the aspirating-and-releasing member as a calibration value.

14. The method according to claim 6, wherein the sorting component is a biological culture chip, and the method further comprises:
on a condition that the biological culture chip accommodating the cells to be sorted is moved to the preset region of the cell sorting device, imaging the cells to be sorted in the preset region through an objective lens of the imaging mechanism to acquire the cell image data.

15. The method according to claim 14, wherein the biological culture chip comprises a plurality of accommodation cavities accommodating the cells to be sorted, and adjacent accommodation cavities being spaced apart by a preset distance.
